# EUROPEAN PATENT APPLICATION

(11) **EP 1 938 889 A1**
(43) Date of publication of application: **02.07.2008**
(21) Application number: 06810217.7
(22) Date of filing: 15.09.2006
(51) Int. Cl.: B01D 69/08, B01D 63/02

(54) **HOLLOW FIBER BAMBOO-BLIND-LIKE ARTICLE, PROCESS FOR PRODUCING HOLLOW FIBER BUNDLE, TUBULAR HOLLOW FIBER MEMBRANE MODULE AND IMMERSION TYPE HOLLOW FIBER MEMBRANE MODULE**

(30) Priority: 30.09.2005 JP 2005287098
(71) Applicant: Kureha Corporation, Tokyo 103-8552 (JP)
(72) Inventor: TADA, Yasuhiro, Omitama-city 3113436 (JP); EBIHARA, Yasushi, Omitama-city, Ibaraki 3113436 (JP); HINO, Masayuki, Omitama-city 3113436 (JP); MIZUNO, Toshiya, Omitama-city 3113436 (JP); MUKUMOTO, Takaaki, Omitama-city 3113436 (JP)
(74) Representative: HOFFMANN EITLE
(86) International application number: PCT/JP2006/318425
(87) International publication number: WO 2007/040036

(57) **Abstract**

The object of the invention is to provide: a screen-like object made of hollow fibers, a method of manufacturing a hollow fiber bundle, a cylindrical module of hollow fiber membrane, and an immersion type module of hollow fiber membrane wherein the hollow fibers are easy to bundle while keeping fiber-to-fiber intervals. The screen-like object made of hollow fibers includes: porous hollow fibers 10 disposed parallel at even intervals, tapes 26 for tying together the hollow fibers respectively at both ends of the hollow fibers, and a water-soluble tape for tying together the hollow fibers at a position apart from both ends of the hollow fibers across the hollow fibers. The method of manufacturing a hollow fiber bundle includes: the steps of forming a screen-like object made of hollow fibers, sealing one end or both ends of the hollow fibers, winding up the screen-like object made of hollow fibers so as to bundle the hollow fibers, forming pottings for integrally securing both ends, respectively, of the wound-up screen-like object, and cutting the potting together with the hollow fibers along a plane at right angles to the hollow fibers to cut off a sealed end and to open the hollow fibers.

## Description

### [Technical Field]

This invention relates to: a screen-like object made of hollow fibers, a method of manufacturing a hollow fiber bundle, a cylindrical module of hollow fiber membrane, and an immersion type module of hollow fiber membrane. This invention relates in particular to: a screen-like object made of hollow fibers, a method of manufacturing a hollow fiber bundle, a cylindrical module of hollow fiber membrane, and an immersion type module of hollow fiber membrane wherein the hollow fibers are easy to bundle while keeping approximately specified inter-fiber intervals.

### [Background Art]

Porous hollow fibers are conventionally in use for filtering liquids, such as in sewage water treatment, drinking water sanitization, fruit juice processing, and blood purification. In many applications, because of large filtering area and facility of cleaning off filtered solid matter, liquid is caused to permeate from the outside surface of the hollow fiber to the inside, in a pressurized type or a suction type. When liquid is filtered by making liquid permeate from the outside surface of the fiber to the inside, solid matter removed by filtering accumulates on the outside surfaces of the hollow fibers. The hollow fibers are bundled and used often as a hollow fiber bundle. Therefore, a method is employed in which the solid matter having accumulated on the outside surface of the hollow fibers is removed by the scrubbing of bubbles rising around the hollow fibers (For example, refer to the Patent Document 1).
[Patent Document 1] Japanese Utility Model 63-38884 (Fig. 2, pp.1-2)

### [Disclosure of the Invention]

### [Problems to be solved by the Invention]

In the case that the solid matter having accumulated on the outside surface of the hollow fibers is removed by the scrubbing of the rising bubbles, if specified intervals among hollow fibers are not maintained, air for scrubbing is hard to send appropriately around the hollow fibers. In particular in the case that the hollow fibers are put vertically and bundled and nozzles for delivering scrubbing-use air are disposed at the potting that secures the underside of the hollow fibers, density of the hollow fibers becomes high in the vicinity of the nozzles, so that it has been hard to deliver the scrubbing-use air appropriately to the hollow fibers.

Therefore, the object of the invention is to provide: a screen-like object made of hollow fibers, a method of manufacturing a hollow fiber bundle, a cylindrical module of hollow fiber membrane, and an immersion type module of hollow fiber membrane wherein the hollow fibers are easy to bundle while keeping approximately specified fiber-to-fiber intervals.

### [Means for Solving the Problems]

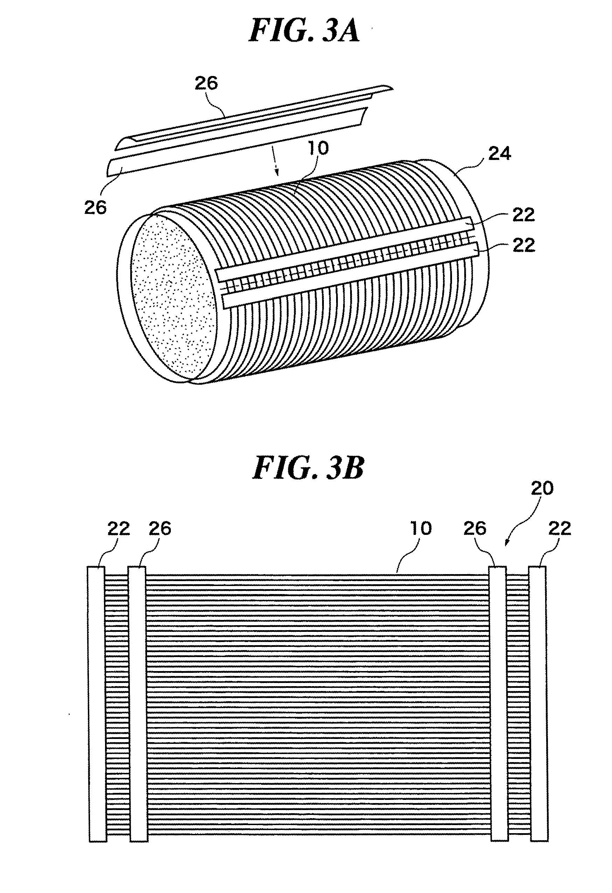

As shown in Figs. 3A and 3B, for example, to achieve the above object, a screen-like object made of hollow fibers according to the present invention comprises; porous hollow fibers 10 disposed parallel at approximately even intervals; tapes 22 for tying together the hollow fibers 10 at both ends, respectively, of the hollow fibers 10; a water-soluble tape 26 for tying together the hollow fibers 10 at a position apart from both ends of the hollow fibers 10 across the hollow fibers 10.

With the above constitution, as the hollow fibers placed parallel at approximately even intervals are tied together with the tapes at both ends and also tied together with the water-soluble tapes at positions between both ends, the hollow fibers are stabilized in mutual positional relationship, and become easy to bundle together while maintaining intervals among fibers. When the hollow fibers of the screen-like object made of hollow fibers overlap each other, because the tapes are water-soluble in particular and because the tapes have a thickness, the space between the hollow fibers is maintained. Also in transport, the hollow fibers are prevented from being disarrayed because they are tied together not only at both ends but also between both ends with the water-soluble tapes. Because the tapes are water-soluble, when the fibers are immersed in liquid and used as hollow fibers, the tapes are removed from the hollow fibers, so that the tapes do not reduce the filtering area of the hollow fibers, and do not hinder the flow of liquid among the hollow fibers and the scrubbing air for cleaning the hollow fibers.

As shown in Figs. 3A to 3C, 4A to 4C and 8A to 8B for example, to achieve the above object, a method of manufacturing a hollow fiber bundle according to the present invention comprises the steps of; forming a screen-like object 20 made of hollow fibers, with porous hollow fibers 10 disposed parallel at approximately even intervals, with both ends of the hollow fibers 10 tied together respectively with tapes 22, and tied together at a position apart from both ends with a water-soluble tape 26; sealing one end 11 or both ends of the hollow fibers 10; winding up the screen-like object 20 made of hollow fibers so as to bundle the hollow fibers 10; forming pottings 50, 60 for integrally securing both ends respectively of the screen-like object 20 made of hollow fibers wound up in the step of winding up; and cutting the potting 50 together with the hollow fibers 10 along a plane at right angles to the hollow fibers 10 to cut off a sealed end 11 and to open the hollow fibers 10.

With the above constitution, as the hollow fiber bundle is manufactured by winding up the screen-like object made of hollow fibers, in which the hollow fibers placed parallel at approximately even intervals are tied together with the tapes at both ends and also tied together with the water-soluble tapes at positions between both ends, and both ends are respectively secured together, the method of manufacturing the hollow fiber bundle makes it possible to maintain specified inter-fiber intervals, and makes it easy to bundle the hollow fibers. In particular, because the tapes are water-soluble, when the screen-like object made of hollow fibers is wound up and the hollow fibers overlap each other, the intervals are maintained due to the thickness of the water-soluble tapes. Further, because the tapes are water-soluble, when the hollow fiber bundle is immersed in liquid to be used as the hollow fibers, they are removed from the hollow fibers, so that they do not reduce the filtering area of the hollow fibers, do not hinder the flow of liquid among the hollow fibers, and do not hinder the flow of scrubbing air for cleaning the hollow fibers.

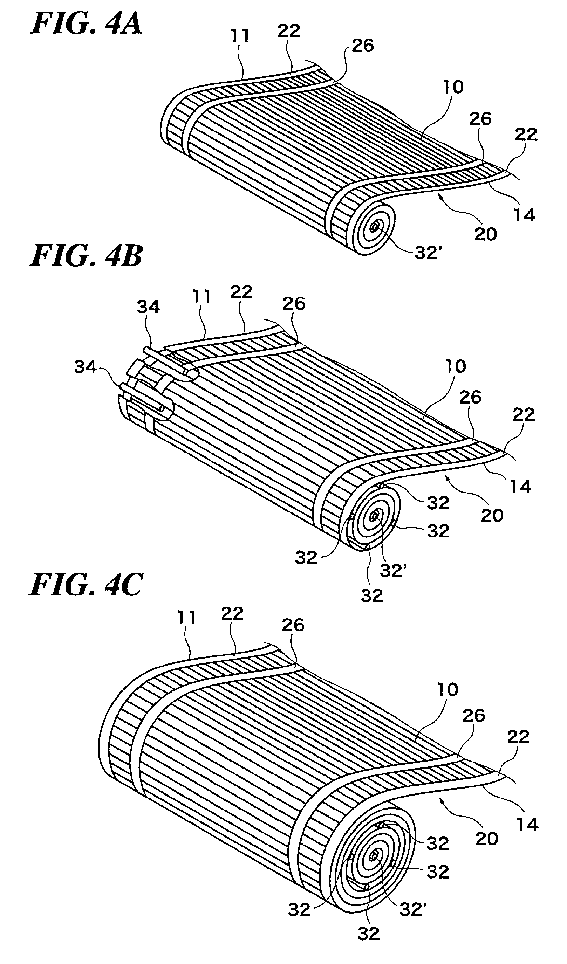

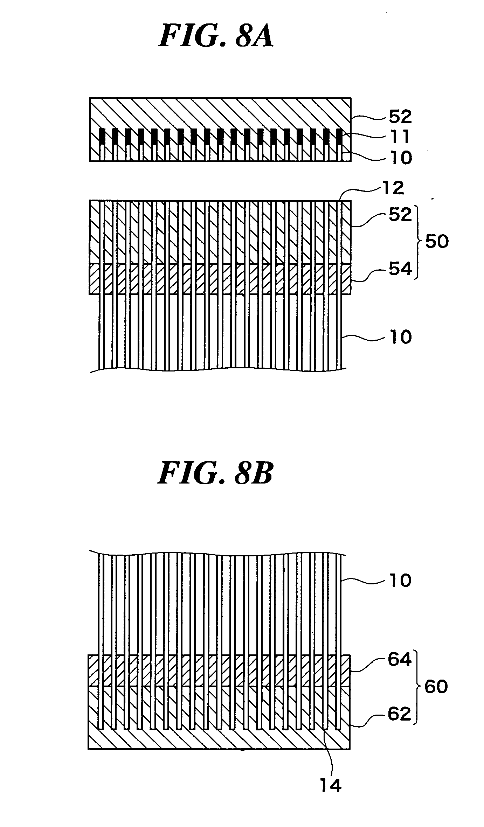

As shown in Figs. 4A to 4C and 8A to 8B, for example, as for a method of manufacturing a hollow fiber bundle according to the present invention, in the method of manufacturing a hollow fiber bundle as describes before the step of sealing may have the step of sealing only one side end 11 of the hollow fibers 10, the step of winding up may have the steps of:
winding the screen-like object 20 in a cylindrical shape, disposing a member forming through hole 32 shorter than the hollow fibers 10 along a periphery on one side end 14, of the screen-like object 20 wound in the cylindrical shape in the step of winding in the cylindrical shape, opposite the side end on which the screen-like object 20 is sealed, and
further winding the screen-like object 20 with the member forming through hole 32 contained therein.

The above constitution results in the method of manufacturing the hollow fiber bundle that makes it possible to close one side ends of the hollow fibers that have not sealed and to form through holes using members forming through hole in the potting for securing the closed end side. This makes it possible to supply liquid to be filtered or supply scrubbing air for cleaning the hollow fibers through the through holes formed on the closed end side.

As shown in Figs. 4A to 4C, for example, in a method of manufacturing the hollow fiber bundle according to the present invention, the method of manufacturing the hollow fiber bundle may comprise the step of; disposing an insert member 34 shorter than the hollow fibers 10 on a periphery of one side 11, of the screen-like object 20 for disposing the member forming through hole 32, on which the screen-like object 20 is sealed.

The above constitution, because the insert members are placed in positions corresponding to the members forming through hole, results in a method of manufacturing the hollow fiber bundle in which the screen-like object made of hollow fibers is easy to wind. Typically, the insert members are placed in positions corresponding exactly to the members forming through hole. However, for example one may be disposed more outside by one turn or several turns. Such should also be included in the category of the corresponding positions.

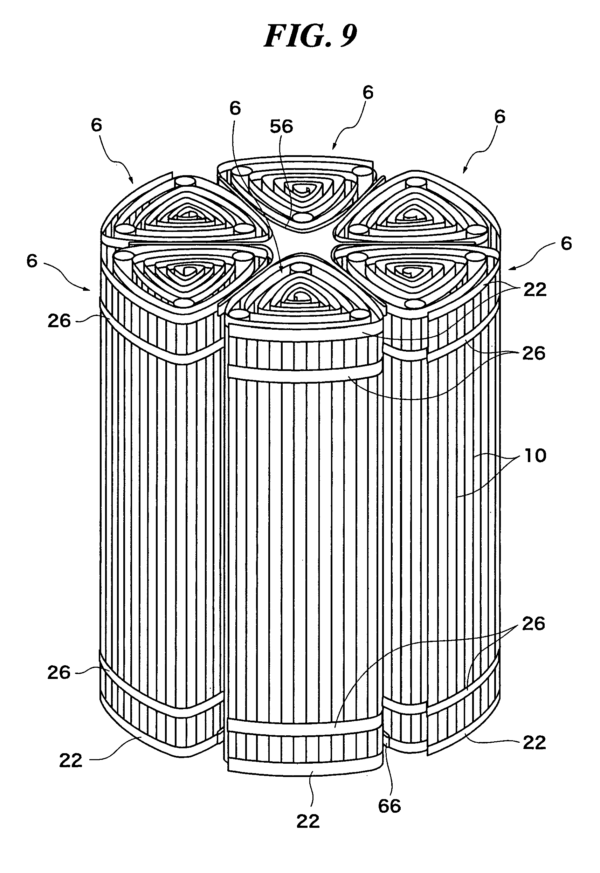

As shown in Fig. 9, for example, in a method of manufacturing the hollow fiber bundle according to the present invention, the method of manufacturing the hollow fiber bundle may comprise the step of;
collecting the screen-like objects 20 wound up in the step of winding, wherein the step of forming the pottings 50, 60 integrally secures the both ends respectively of the screen-like objects 20 collected in the collecting step.

The above constitution results in a method of manufacturing the hollow fiber bundle in which the specified intervals among the hollow fibers are easy to maintain and the hollow fibers are easy to bundle, even though the number of hollow fibers increases.

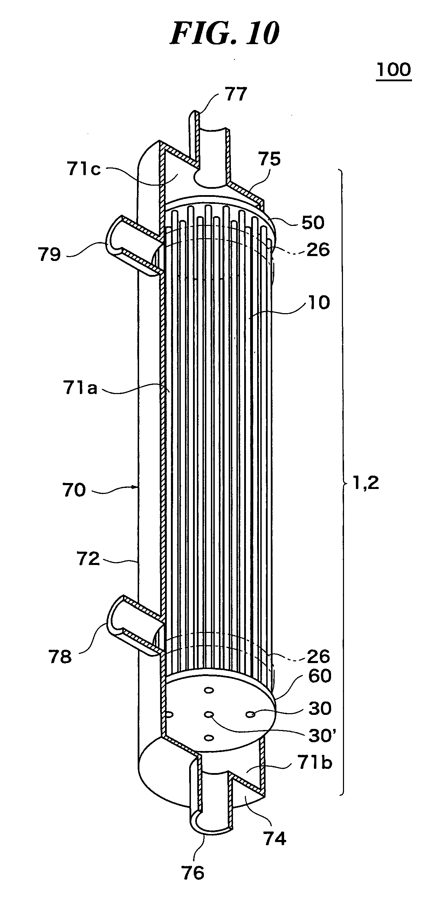

As shown in Fig. 10, for example, to achieve the above object, a cylindrical module of hollow fiber membrane according to the present invention comprises, the hollow fiber bundle 1 manufactured by the method of manufacturing the hollow fiber bundle as above; an oblong casing 70 containing the hollow fiber bundle 1; nozzles 76, 77 respectively connected to both ends of the casing 70; and nozzles 78,79 connected to the casing 70 at a location between the pottings 50, 60.

The above constitution results in the cylindrical module of hollow fiber membrane, having a hollow fiber bundle bundled while maintaining intervals among the fibers, that makes it possible to filter through the hollow fibers liquid to be filtered introduced between the pottings and collect the filtered liquid from the nozzles located at the ends of the casing, and stabilize mutual positional relationship between the hollow fibers. Thus, because the intervals among the hollow fibers are maintained, it is easy to supply scrubbing air appropriately, hollow fibers may be cleaned, and liquid to be filtered is easy to flow around all the hollow fibers.

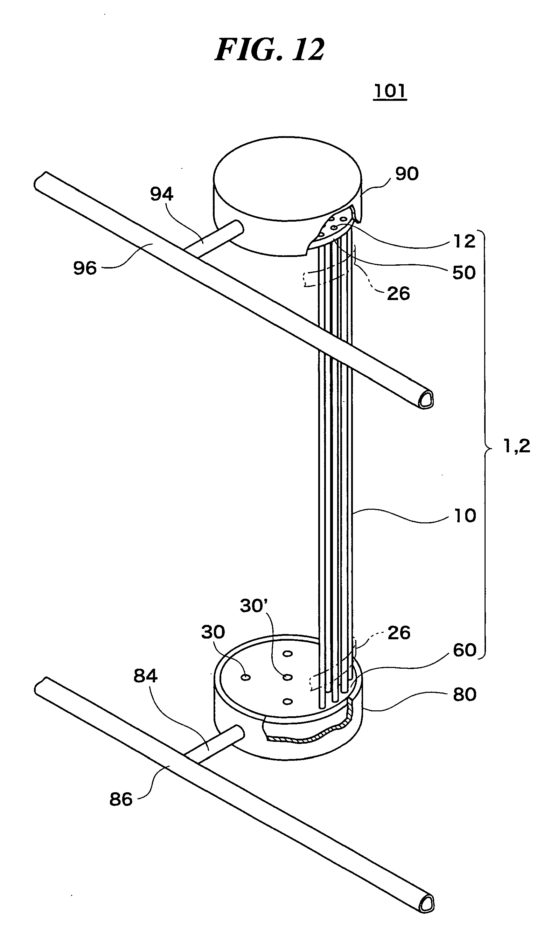

As shown in Fig. 12, for example, to achieve the above object, an immersion type module of hollow fiber membrane constituted to be immersible in liquid to be filtered according to the present invention comprises; a hollow fiber bundle 1 manufactured by the method of manufacturing a hollow fiber bundle above; and a filtered liquid header 90 in communication with an open end 12 of the hollow fiber bundle 1 opened in the step of the cutting.

The above constitution result in an immersion type module of hollow fiber membrane, having hollow fiber bundles bundled while maintaining intervals among the fibers, that makes it possible to filter liquid to be filtered with the hollow fibers and collect the filtered liquid from the nozzle in communication with the open end of the hollow fiber bundle, and stabilize the mutual positional relationship between the hollow fibers. Therefore, the intervals among hollow fibers are maintained, scrubbing air is easy to supply to the hollow fibers, the hollow fibers may be cleaned, and liquid to be filtered is easy to flow around the hollow fibers.

### [Effects of the Invention]

The screen-like object according to the invention includes: porous hollow fibers placed parallel at approximately even spatial intervals, tapes tying together the hollow fibers at their both ends, and water-soluble tapes tying together the hollow fibers at positions apart from the both ends of the hollow fibers in the direction across the hollow fibers. Therefore, the mutual positional relationship between the hollow fibers is stabilized and bundling becomes easy while maintaining the intervals.
With the method of manufacturing the hollow fiber bundle according to the invention, the hollow fiber bundle is manufactured by winding up the screen-like object so as to bundle the hollow fibers, in which the hollow fibers placed parallel at approximately even spatial intervals, are tied together with the tapes at both ends respectively and also tied together with the water-soluble tapes at positions between both ends, and both ends are respectively secured together. As a result, specified intervals among the hollow fibers are maintained and the hollow fibers are easy to bundle.

When the hollow fiber bundle manufactured by the above manufacturing method is used in the cylindrical module of hollow fiber membrane, as the hollow fibers around the through holes are placed while specified intervals are maintained, it is easy to filter liquid to be filtered and to carry out scrubbing. When the hollow fiber bundle manufactured by the above manufacturing method is used in the immersion type module of hollow fiber membrane, as the hollow fibers around the through holes are placed while specified intervals are maintained, liquid to be filtered flows easily and scrubbing is easy to carry out.

### [Brief Description of Drawings]

Fig. 1 is an oblique view of the hollow fiber bundle with insert members according to the invention.
Fig. 2 is an oblique view of the hollow fiber bundle without insert members according to the invention.
Figs. 3A and 3B are views for explaining a method of manufacturing a screen-like object made of hollow fibers; Fig.3A shows a state in which hollow fibers are wound around a drum and tied with tapes and water-soluble tapes, and Fig.3B shows the screen-like object with the taped portion of Fig.3A cut open.
Figs. 4A to 4C are views for explaining the step of winding up the screen-like object made of hollow fibers; Fig.4A shows the state of starting winding the screen-like object made of hollow fibers, Fig.4B shows the state in which the members forming through hole and the insert members are placed in position, and Fig.4C shows the state in which winding up the screen-like object made of hollow fibers is almost over.
Figs. 5A to 5C are views for explaining the step of winding up the screen-like object made of hollow fibers not provided with the insert member; Fig.5A shows the state of beginning to wind the screen-like object made of hollow fibers, Fig.5B shows the state in which the members forming through hole are placed in position, and Fig.5C shows the state in which winding up the screen-like object made of hollow fibers is almost over.
Figs. 6A and 6B are views for explaining a bobbin for winding the screen-like object made of hollow fibers; Fig.6A shows the bobbin with one bobbin bar in the center when winding is started, and Fig.6B shows the bobbin with bobbin bars having the members forming through hole and the insert members.
Fig. 7 is a partial view for explaining the array of hollow fibers when winding up the screen-like object made of hollow fibers is over.
Fig. 8A is a view for explaining a state in which the potting is formed to secure the hollow fibers showing an open side potting.
Fig. 8B is a view for explaining a state in which the potting is formed to secure the hollow fibers showing a closed side potting.
Fig. 9 is an oblique view for explaining the manner of putting together wound-up screen-like objects made of hollow fibers.
Fig. 10 is a sectional view for explaining the constitution of the cylindrical module of hollow fiber membrane.
Fig. 11 is a sectional view for explaining the constitution of an example of modified cylindrical module of hollow fiber membrane.
Fig. 12 is a view for explaining the constitution of an immersion type module of hollow fiber membrane.

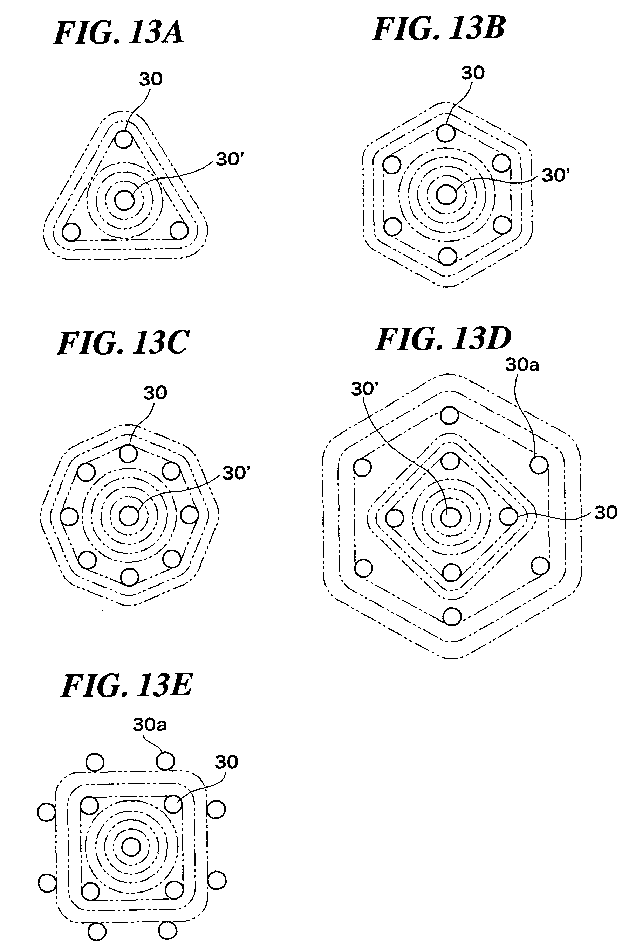

Fig. 13A is a view for explaining an example of arrangement of the through holes and the hollow fibers with three through holes on a circumference, Fig.13B is a view for explaining an example of arrangement of the through holes and the hollow fibers with six through holes on a circumference, Fig.13C is a view for explaining an example of arrangement of the through holes and the hollow fibers with eight through holes on a circumference, Fig. 13D is a view for explaining an example of arrangement of the through holes and the hollow fibers with additional through holes around the through holes arranged on the circumference, and Fig.13E is a view for explaining an example of arrangement of the through holes and the hollow fibers with through holes formed outside the hollow fibers at the end of winding step.

### [Description of Reference Numerals and Symbols]

1, 2: hollow fiber bundle
10: hollow fiber
11: sealed end
12, 12': open end
14: closed end
20: screen-like object
22: tape
24: drum
26: water-soluble tape
30', 30, 30a, 36: through hole
32, 32': member forming through hole
34: insert member
38: air supply pipe
40: bobbin
42, 42': bobbin bar
50: open side potting
52, 62: adhesion layer
54, 64: protection layer
56, 66: partition plate
60: closed side potting
70: casing
71a: middle portion
71b: entry portion
71c: liquid collecting portion
72: trunk plate
74: lower end plate
75: upper end plate
76: liquid supply nozzle
77: filtered liquid nozzle
78: lower side nozzle
79: upper side nozzle
80: air header
84: connecting pipe
86: air supply pipe
90: filtered liquid header
94: connecting pipe
96: filtered liquid pipe
100, 100': cylindrical module (of hollow fiber membrane)
101: immersion type module (of hollow fiber membrane)
c1: circumferential interval
c2: peripheral interval
r1: radial interval
r2: peripheral right angle interval

### [Best Mode for Carrying out the Invention]

This application is based on the Patent Applications No. 2005-287098 filed on September 30, 2005 in Japan, the contents of which are hereby incorporated in its entirety by reference into the present application, as part thereof.
The present invention will become more fully understood from the detailed description given herein below. However, the detailed description and the specific embodiment are illustrated of desired embodiments of the present invention and are described only for the purpose of explanation. Various changes and modifications will be apparent to those ordinary skilled in the art on the basis of the detailed description.
The applicant has no intention to give to public any disclosed embodiment. Among the disclosed changes and modifications, those which may not literally fall within the scope of the patent claims constitute, therefore, a part of the present invention in the sense of doctrine of equivalents.

Embodiments of the present invention are described below in reference to appended drawings. In the drawings, the same parts or counterparts are provided with the same reference numerals and symbols, omitting redundant explanations.

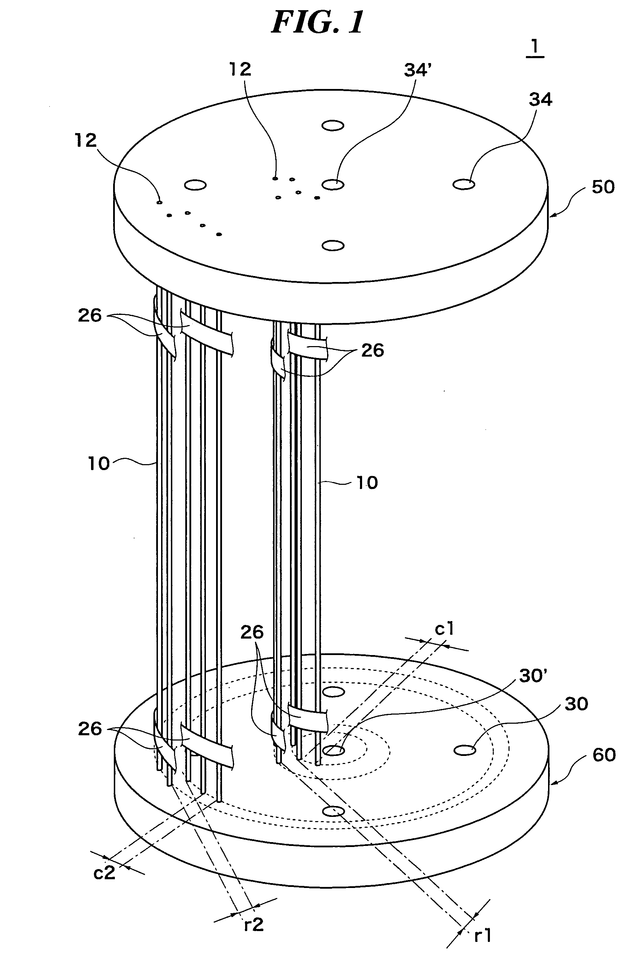

First in reference to Fig. 1, the hollow fiber bundle manufactured according to the manufacturing method of the invention will be described using the screen-like object made of hollow fibers as an embodiment of the invention. Fig. 1 is an oblique view of the hollow fiber bundle 1. While the hollow fibers 10 are disposed in the entire hollow fiber bundle 1, only part of them are shown in Fig. 1. The hollow fiber bundle 1 includes: hollow fibers 10 disposed parallel to each other, a closed side potting 60 for securing the closed end side of the hollow fibers 10, and an open side potting 50 for securing the open end side of the hollow fibers 10.

Each of the hollow fibers 10 is a hollow fiber made of a porous material. In the hollow fiber 10, a hollow space extends through the center in the longitudinal direction. The outside diameter of the hollow fiber 10 is in the order of for example 1 to 3 millimeters, and the thickness of the membrane making up the hollow fiber is in the order of 10 to 500 micrometers. The hollow fiber 10 is typically made of resin material having resistance against water and chemicals. The term 'resistance against chemicals' as used herein means the resistance against chemicals mixed in liquid to be filtered when the hollow fiber bundle 1 is used, and includes resistance against chemicals added when cleaning solid matter accumulated on the surface of the hollow fibers 10. The hollow fiber 10 is preferably made of resin material derived from vinylidene fluoride. Resin material derived from vinylidene fluoride is excellent in heat resistance and mechanical strength in addition to chemical resistance. As resin materials derived from vinylidene fluoride, such ones may be used as: homopolymer of vinylidene fluoride, namely polyvinylidene fluorine, copolymer with other monomer capable of copolymerizing, or mixture of these. As the monomer capable of copolymerizing with resin materials derived from vinylidene fluoride, one kind or more than one kind may be used out of such ones as: Tetrafluoroethylene, propylene hex a fluoride, Trifluoroethylene, Trifluorochloroethylene, and vinyl fluoride. The resin material derived from vinylidene fluoride preferably contain 70 mol % or more of vinylidene fluoride and further preferably be a homopolylmer made of 100 mol % of vinylidene fluoride because it is high in both resistance against chemicals and mechanical strength.

The hollow fiber 10 may be manufactured by adding 100 to 300 weight parts in total amount of plasticizer and good solvent of vinylidene fluoride resin to 100 weight parts of resin derived from vinylidene fluoride so that the percentage of good solvent in the total amount of plasticizer and good solvent is 8 to 35 weight %, then extrusion forming, and extracting plasticizer and good solvent with extraction liquid. Further in order to increase the degree of crystallization, it is preferable to apply heat treatment for example at temperatures of 100 to 140 degrees C for 3 to 900 seconds, followed by uniaxial extension, in a longitudinal direction. The uniaxial extension increases pore rate and pore diameter and improves tensile strength and ultimate elongation, and linearity. Uniaxially extended hollow fiber of vinylidene fluoride-based resin exhibits, as an example, pore rate of 60 to 85 %, average pore diameter of 0.05 to 0.15 micrometers, tensile strength of 5 MPa and greater, and ultimate elongation at fracture of 5 % and greater.

The hollow fibers 10 are open at their one side ends, and closed at the other side ends. Fig. 1 depicts the closed ends on the lower side and the open ends 12 on the upper side. While the closure of the closed ends of the hollow fibers 10 may be done by sealing the hollow fiber ends themselves by heat sealing or the like, it is efficient and secure as described later to close the hollow fiber ends with the potting 60. Incidentally, the hollow fibers 10 may be open at their both side ends. When both side ends of the hollow fibers 10 are open, through holes 30 and 30' (described later) are not formed.

The closed side potting 60 on the closed end 14 side (See Fig. 8B) of the hollow fibers 10 is a disk at right angles to the hollow fiber 10 and made of hard resin material to secure the end of the hollow fibers 10. As the hard resin material, while such ones are used as urethane-based resin and epoxy-based resin, urethane-based resins producing less heat during solidification are favorably used. The closed side potting 60 is formed with through holes 30 and 30' of the circular cross section passing through the thickness of the disk. One through hole 30' is located in the center of the closed side potting 60 and the through holes 30 are located at even intervals on the circumference centered on the center of the closed side potting 60. Incidentally, the shape of the cross section of the through holes 30 and 30' may be of any other shape than circle; such as polygon, ellipse, arcuate slit, etc.

The open side potting 50 on the open end 12 side of the hollow fibers 10 is a disk at right angles to the hollow fibers, made of hard resin material, and the same as the closed side potting 60 in both shape and size, and secures the ends of the hollow fibers 10. The open side potting 50 is usually made of the same material as the closed side potting 60. However, they may be formed respectively different in shape, size, and material. The hollow fibers 10 pass through the open side potting 50 and open on the surface (upper surface in Fig. 1) opposite the side on which the hollow fibers 10 are located. The open end 12 of the hollow fibers 10 may be flush with the surface of the open side potting 50 or the hollow fibers 10 may slightly project beyond it and open. Insert members 34 and 34' are disposed in positions on the open side potting 50 opposite the through holes 30 and 30' bored in the closed side potting 60. The insert members 34 and 34' may be made of resin material resistant to water and chemicals, may be the same as the through holes 30 and 30' in cross-sectional shape, the same or smaller in length than the thickness of the open side potting 50, and of a bar shape. Here, the term 'the same in cross-sectional shape' is acceptable if the external shape of the insert members 34 and 34' is the same as the shape and size of the through holes 30 and 30'. As the hollow fibers 10 are not secured in the positions of the through holes 30 and 30' and the insert members 34 and 34' , the hollow fibers 10 around the through holes 30 and 30' and the insert members 34 and 34' are disposed while keeping parallelism when the through holes 30 and 30' and the insert members 34 and 34' of the same cross-sectional shape are formed and inserted in the opposing positions. In other words, the term 'the same cross-sectional shape' as used herein is acceptable, if it is the same to the extent that the hollow fibers 10 around the through holes 30 and 30' and the insert members 34 and 34' are disposed while keeping parallelism. For example, even if an insert member 34 of equilateral hexagon in cross section to the through hole 30 of circular shape is included in the category of the same cross-sectional shape as long as the hollow fibers 10 around it are disposed parallel.

The hollow fibers 10 are positioned as their both ends are secured with the closed side potting 60 and the open side potting 50. The hollow fibers 10 are disposed parallel, with their intervals maintained at specified intervals. To explain in detail on the surface of the closed side potting 60, the hollow fibers 10 are disposed on an approximate concentric circle around the central through hole 30' inside the through holes 30 disposed on the circumference. To see it more closely, the hollow fibers 10 are disposed not circularly but spirally. However, as the lead by one turn of the spiral is smaller in comparison with the size of the spiral, it is called a concentric circle by neglecting the lead. Incidentally, also for the circumference on which the through holes 30 are disposed, the slight lead of the spiral has is neglected. On this concentric circle, the hollow fibers 10 are disposed with their circumferential interval c1 set as a specified circumferential interval. They are also disposed with their radial interval r1 set as a specified radial interval. Incidentally, the circumferential interval and the radial interval may or may not be the same. Here, the radial interval r1 is the interval between adjacent hollow fibers 10 on the concentric circle. The radial interval r1 is strictly the interval between hollow fibers 10 produced with the lead of the spiral. The hollow fibers 10 are disposed on a concentric circle inside the through holes 30 disposed on the circumference, or bundled in a cylindrical shape. Incidentally, also in the case that the through hole 30' is not formed in the center of the closed side potting 60 and the hollow fibers 10 are disposed from the center, because an imaginary circle on the innermost side of the concentric circle is assumed, it should be considered to be included in the category of being bundled in a cylindrical shape assuming a space within the imaginary circle.

The hollow fibers 10 are disposed outside of the through holes 30 in a shape surrounding the through holes 30 disposed on a circumference. Here, the term 'a shape surrounding the through holes 30 disposed on a circumference' means the shape that includes all the through holes 30 in it and that circumscribes the through holes 30. One through hole 30 may be connected to another with a straight line. A circle may circumscribe all the through holes 30. Or, even a shape being inside the straight line connecting the through hole 30 to another will do. In Fig. 1, the circumcircle of the through holes 30 is the shape that surrounds the through holes 30. As for this circumscribing shape too, like the concentric circle described above, the hollow fibers 10 are disposed in a spiral shape, the shape should be deemed to include the imaginary shape neglecting the lead by one turn of the spiral. On the circumscribing shape, the hollow fibers 10 are disposed with the peripheral interval c2 in the peripheral direction (direction along the circumscribing shape, circumferential direction in Fig. 1) made the same as the specified circumferential interval for the circumferential interval c1, and with the peripheral right angle interval r2 made the same as the specified radial interval for the radial interval r1 . The term "peripheral right angle interval r2 ' is the interval between similar shapes adjacent to each other using a shape approximately similar to an adjacent shape in which the hollow fibers 10 surround the through holes 30. Here, the term 'approximately similar' should mean a category that includes shapes that are not similar in a strict sense but included within the range of shapes that circumscribe the through holes 30. Incidentally, the peripheral interval c2, as long as it is set to a specified interval, may be different from the circumferential interval c1; and the peripheral right angle interval r2, as long as it is set to a specified interval, may be different from the radial interval r1.

The specified circumferential and radial intervals and specified peripheral interval and peripheral right angle interval may be given by range; and the interval is such that permits filtered liquid to flow among the hollow fibers 10 and that scrubbing air is sent appropriately among the hollow fibers 10 even if solid matter accumulates to a certain extent on the hollow fibers 10. Setting the filling rate of the hollow fibers 10 to 50 to 70 % makes it possible to take a large filtering area relative to the same cross-sectional area and makes it easy to appropriately supply scrubbing air around the hollow fibers while the filtered liquid flows through the intervals among the hollow fibers 10. Incidentally, the term 'filling rate' is the value expressed in percentage of the area taken up with the hollow fibers (cross-sectional area per single hollow fiber multiplied by the number of hollow fibers included in a specified cross-sectional area) to a specified cross-sectional area at right angles to the hollow fibers (cross-sectional area excluding the through holes and the space between the hollow fibers and the casing). As an example, for the hollow fibers 10 of an outside diameter of 1.3 mm, the specified circumferential interval c1 is set to about 0.2 to 0.7 mm (center to center interval of the hollow fibers 10 of about 1.5 to 2.0 mm), and the specified radial interval r1 is set to about 0.05 to 0.15 mm.

The hollow fibers 10 at the time of manufacture are additionally tied to each other with the water-soluble tapes 26 between the open side potting 50 and the closed side potting 60. The water-soluble tapes 26 tie together the hollow fibers 10 along the hollow fibers 10 disposed in spiral shape as described before. In other words, all of the hollow fibers are tied together by one tape. In this way, it is possible to manufacture the hollow fiber bundle 1 as the hollow fibers 10 are tied together while maintaining stabilized mutual relationship of positions in which the hollow fibers 10 are disposed, the specified intervals are maintained, and the hollow fibers are disposed parallel. In particular it is preferable to apply the water-soluble tapes 26 to positions respectively near the open side potting 50 and the closed side potting 60 as shown in Fig. 1 because in this way the arrangement of the hollow fibers 10 is stabilized when forming the potting (described later) and the hollow fibers 10 are likely to be disposed evenly on the pottings 50 and 60. Incidentally, the water-soluble tapes 26 should be applied so that all of them are not embedded in the pottings 50 and 60. The water-soluble tapes 26 are preferably applied to positions apart by 5 to 100 mm, more preferably 10 to 50 mm from the surfaces of the pottings 50 and 60. Thus, it is easy to evenly dispose the hollow fibers 10 when attaching the pottings 50 and 60 and avoid interference with the potting material or protective layer material (described later) when attaching the pottings 50 and 60.

The water-soluble tape 26 is a tape made of a water-soluble film such as a polyvinyl alcohol film or paper of water-dispersing property on which water-soluble adhesive layer such as starch layer is laminated. The water-soluble tape 26 need not necessarily be dissolved but may be acceptable if it is disintegrated in liquid (water) and dispersed. Such a tape that is disintegrated in liquid (water) and dispersed is also included in the water-soluble tape.

Tying and holding together the hollow fibers 10 with the water-soluble tapes 26 stabilizes the relationship of positions in which the hollow fibers 10 are disposed at the time of manufacture. However, when use of the hollow fiber bundle 1 is started, the water-soluble tapes 26 are dissolved with liquid, or disintegrated and dispersed, and removed from the hollow fibers 10. Therefore, when the hollow fiber bundle 1 is used, the water-soluble tapes 26 do not cause decrease in the filtering area of the hollow fibers 10, or do not stand in the way of the flow of liquid to be filtered through the intervals among the hollow fibers. Incidentally, while Fig. 1 shows the two water-soluble tapes 26 applied to positions near the pottings 50 and 60, the tapes may be additionally applied to positions evenly dividing the part of the hollow fibers 10 between the two water-soluble tapes 26. In particular when the length of the hollow fibers 10 is great (the distance between the open side potting 50 and the closed side potting 60 is great), tying together the hollow fibers 10 with two or more water-soluble tapes 26 makes it easy to stabilize the relationship of positions in which the hollow fibers 10 are disposed.

As the hollow fiber 10 in the hollow fiber bundle 1 constituted as described above is high in both linearity and mechanical strength, the closed side potting 60 and the open side potting 50 are securely supported so that the hollow fibers 10 are in a taut state. The liquid to be filtered is collected from the outside surface of the hollow fibers 10 through the inside (hollow part) of the hollow fibers on the open end 12 side by pressurizing the liquid to be filtered or by suctioning it from the open end 12 side. At this time, as the hollow fibers 10 are disposed with high linearity and at specified intervals, liquid to be filtered flows easily among the hollow fibers 10. When the hollow fibers 10 are set up in the taut state, frequency of vibration of the hollow fibers increases when scrubbing is carried out, so that fine sediment is easy to remove. Incidentally, the hollow fibers 10 may also be set up in a slack state. When the hollow fibers 10 are set up in the slack state, the hollow fibers oscillate largely, so that coarse sediment is easy to remove. Here, the slack state means a state in which the length of the hollow fibers 10 is made longer by 3 to 5 % for example, than the distance between the open side potting 50 and the closed side potting 60. In this casing, it is said that the slack rate is 3 to 5 %. The liquid to be filtered is filtered through the porous membrane of the hollow fibers 10 when the liquid enters the inside of the hollow fibers 10. In other words, liquid flowing through the inside of the hollow fibers 10 is already filtered clean. By filtering, solid matter accumulates on the outside surface of the hollow fibers 10.

When solid matter accumulates on the outside surface, the filtering area of the hollow fibers 10 decreases and so the filtering efficiency decreases. Therefore, it is necessary to remove the solid matter on the hollow fibers 10 by cleaning. To carry out the cleaning, scrubbing air is delivered out of the through holes 30 and 30' of the closed side potting 60 so as to peel the solid matter off the hollow fibers 10 with upward movement of scrubbing air and by simultaneously occurring vibration (thought to be included in the scrubbing effect) of the hollow fibers 10 themselves. At this time, as the hollow fibers 10 are disposed around the through holes 30 and 30' while specified intervals are maintained, scrubbing air is supplied appropriately to the hollow fibers 10. In other words, scrubbing air is supplied around or at least near all the hollow fibers 10, so that solid matter accumulated on the outside surface of the hollow fibers 10 is peeled off. In particular when the ratio of the number of hollow fibers 10 inside the through holes 30 disposed on the circumference to the number of hollow fibers 10 disposed outside is set to about 0.2 to 5, it is possible to favorably supply scrubbing air to both inside and outside. Outside that range, scrubbing air may not be distributed evenly to the hollow fibers 10. Incidentally, the ratio is preferably set between 0.5 and 4, more preferably between 0.8 and 3.

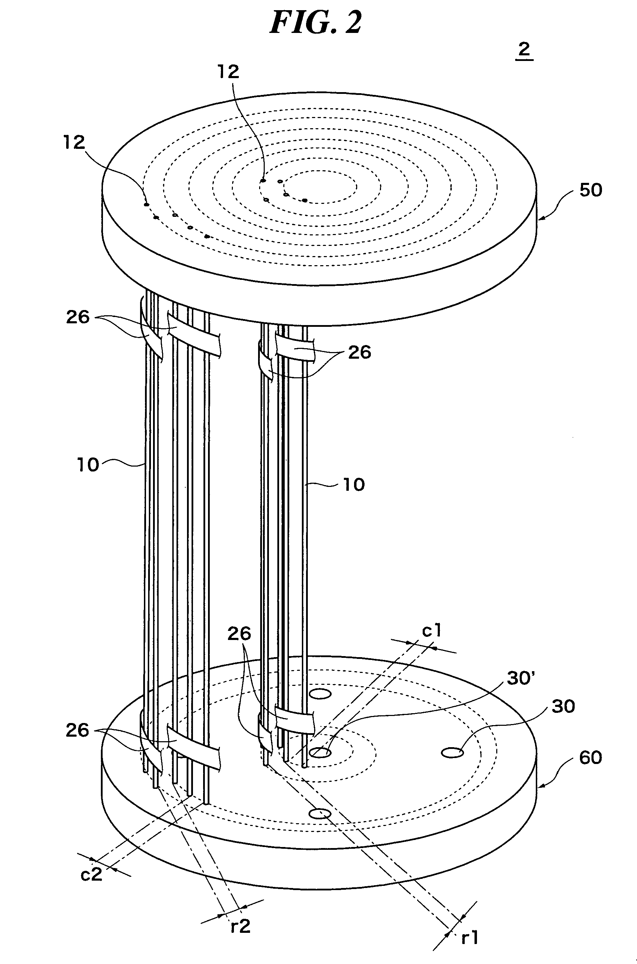

As shown in Fig. 2, as for the hollow fiber bundle 2, the open side potting 50 may not be provided with the insert member 34 (See Fig. 1). In other words, while the constitution of the closed side potting 60 is the same as that of the hollow fiber bundle 1 shown in Fig. 1, the open side potting 50 is different in constitution. The open side potting 50 is not provided with the insert member 34. At the open side potting 50, all the hollow fibers 10 are disposed concentrically, or in a cylindrical shape. When the hollow fibers 10 disposed in this way, the hollow fibers are not necessarily parallel. Even if the hollow fibers 10 are disposed not necessarily parallel, as the hollow fibers 10 are disposed while specified intervals are maintained around the through holes 30 and 30' , scrubbing air is appropriately supplied to the hollow fibers 10. Because they are not necessarily parallel, passages for scrubbing air are hard to be formed among the hollow fibers 10. Thus, when scrubbing air rises along the hollow fibers 10, it is hindered with the hollow fibers 10 from rising smoothly, so that it weaves its way up through the hollow fibers 10. Therefore, scrubbing the hollow fibers 10 with scrubbing air is carried out more effectively.

Next, in reference to Figs. 3A to 8B, and also appropriately in reference to Figs. 1 and 2, a method of manufacturing the hollow fiber bundle will be described. First, as shown in an oblique view of Fig. 3A, a long hollow fiber 10 is wound around a drum 24. The hollow fiber 10 is wound spirally with a small sequential lead, or interval, starting from one end of the drum. The small interval becomes the above-mentioned, specified circumferential interval c1 or peripheral interval c2 among the hollow fibers 10 in the hollow fiber bundle 1 or the hollow fiber bundle 2 shown in Fig. 1 or 2. In other words, the small intervals are approximately even intervals and correspond to the above-mentioned specified intervals. When winding the hollow fiber 10 around the drum 24 is over, the hollow fibers 10 are tied together using tapes 22 extending across the hollow fibers 10 in the axial direction of the drum 24. In other words, two tapes 22 are applied parallel, with an interval there between, to fix mutual intervals among the hollow fibers 10. The tape 22 may be resin material applied in a tape shape and solidified to the extent of holding the hollow fibers 10 at intervals. Or, the tapes 22 may be applied to the drum 24 beforehand and the hollow fibers 10 may be wound over the tapes 22. Additionally, water-soluble tapes 26 are applied parallel to the tapes 22 to tie together the hollow fibers 10. The water-soluble tapes 26 are applied so that the entirety is not embedded in the pottings 50 and 60 when the pottings 50 and 60 described later are formed. The water-soluble tapes 26 are applied in positions at a distance from the surfaces of the pottings 50 and 60, preferably at a distance of about 5 to 100 mm, more preferably 10 to 50 mm. Further, in the case that the hollow fiber 10 is long, the water-soluble tapes 26, as described before, may be additionally applied at even intervals between the above-mentioned water-soluble tapes 26. In other words, when the number of water-soluble tapes 26 is three, it is preferable to apply the additional tape in the middle position between the above-mentioned water-soluble tapes 26. When the number of water-soluble tapes 26 is four, it is preferable to apply the additional tapes in positions that evenly divide the distance between the water-soluble tapes 26 into three. Next, the hollow fibers 10 are cut along the centerline (dash-and-dotted line in Fig. 3A) so as to evenly divide the gap between the two tapes 22. The hollow fibers 10 are cut along the centerline between the two tapes 22 and made in a linear shape, the hollow fibers 10 are placed parallel as shown in the plan view of Fig. 3B, both ends of the hollow fibers 10 are respectively tied together using the tapes 22, and further tied together using water-soluble tapes 26 to make a screen-like object 20 made of hollow fibers (a hollow fiber bundle like a roll-up blind). Incidentally, instead of cutting between the two tapes 22, a single tape may be cut into two, in the tape length direction.

As for the screen-like object 20 made of hollow fibers, hollow fibers 10 disposed parallel are tied together at their both ends with the tapes 22, and tied together with the water-soluble tapes in positions apart from the tapes 22 and not interfering with the potting 50. Therefore, disposition of the hollow fibers 10 is unlikely to be disarrayed. Also in transport, it is easy to maintain the parallel disposition. Also in the process of manufacture thereafter, it is easy to maintain the parallel disposition. In particular as the water-soluble tapes 26 are applied in positions near the open side potting 50 and the closed side potting 60, the disposition of the hollow fibers 10 is stabilized when the pottings are formed (described later), and it becomes easy to evenly dispose the hollow fibers 10 on the potting 50 and 60.

Next, as shown in Figs. 4A to 4C explanatory views of winding up the screen-like object 20 of hollow fibers, the screen-like object 20 is wound up. First, as shown in Fig. 4A, the member forming through hole 32' is put to one end of the parallel hollow fibers 10 of the screen-like object 20, the insert member 34' (See Fig. 1) is put to the other end, and the screen-like object 20 is wound in the direction at right angles to the longitudinal direction of the hollow fibers 10, so as to form a bundle of hollow fibers 10, or so as to wind up a roll-up blind around both the member forming through hole 32' and the insert member 34'. In other words, the hollow fibers 10 remain linear. The member forming through hole 32' is made of a material that is hard to adhere to the material that forms the closed side potting 60 (described later) and, when it is pulled off after the closed side potting 60 is formed, the through hole 30' (See Figs. 1 and 2) is left behind it. An alternative constitution may be employed in which the member forming through hole 32' is formed with the through hole 30' so that the through hole 30' is formed when the member forming through hole 32' is inserted with both ends appearing on the surfaces of the closed side potting 60.

When the screen-like object 20 of hollow fibers is wound up in an appropriate number of layers, the members forming through hole 32 are placed around the wound-up screen-like object 20 of hollow fibers. The member forming through hole 32 is formed in the same manner as the member forming through hole 32'. The members forming through hole 32 (four in Fig. 4B) are disposed along one turn. In other words, they are disposed approximately concentrically with the member forming through hole 32'. The members forming through hole 32 are preferably disposed at even intervals. The insert members 34 that are the same in a cross-sectional shape as the member forming through hole 32, or the same in cross-sectional shape as the through hole 30, are disposed in positions corresponding to the members forming through hole 32. As the members forming through hole 32 and the insert members 34 of the same cross-sectional shape are disposed in corresponding positions, thereafter it is easy to wind up the screen-like object 20 of hollow fibers, and it is possible to maintain parallelism of the hollow fibers 10. Incidentally, the number of layers that is appropriate for disposing the members forming through hole 32 is the number of layers that permits scrubbing air to be appropriately supplied to the hollow fibers 10, or a design value determined from diameter and length, specified circumferential interval, radial interval of the hollow fibers 10, scrubbing air delivery pressure, etc.

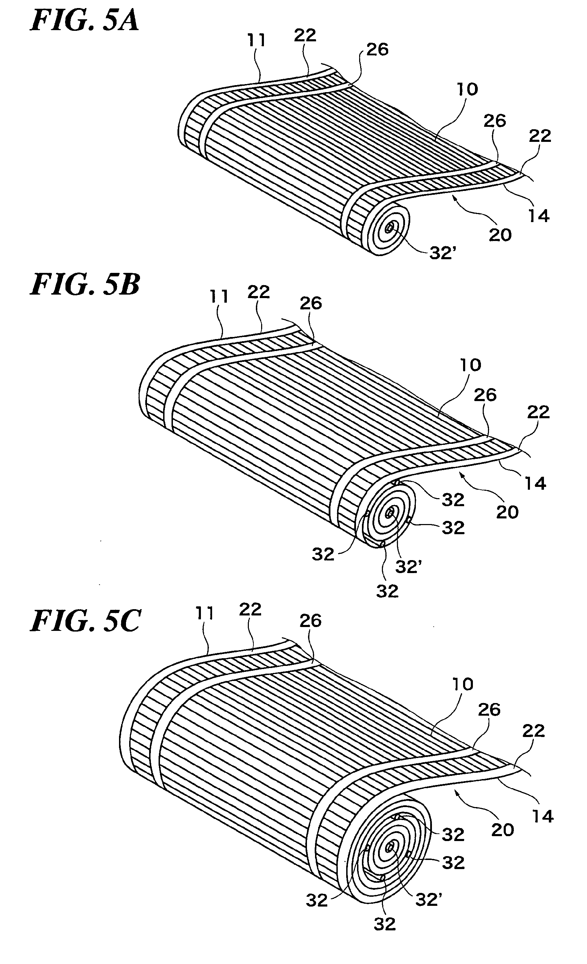

The screen-like object 20 of hollow fibers may also be wound as shown in Figs. 5A to 5C without the insert members 34 being disposed. The side on which the members forming through hole 32 are disposed is slightly different in outside diameter from the side not disposed, and the hollow fibers 10 are not necessarily parallel. However, no insert members 34 are disposed in order to manufacture the hollow fiber bundle 2 shown in Fig. 2.

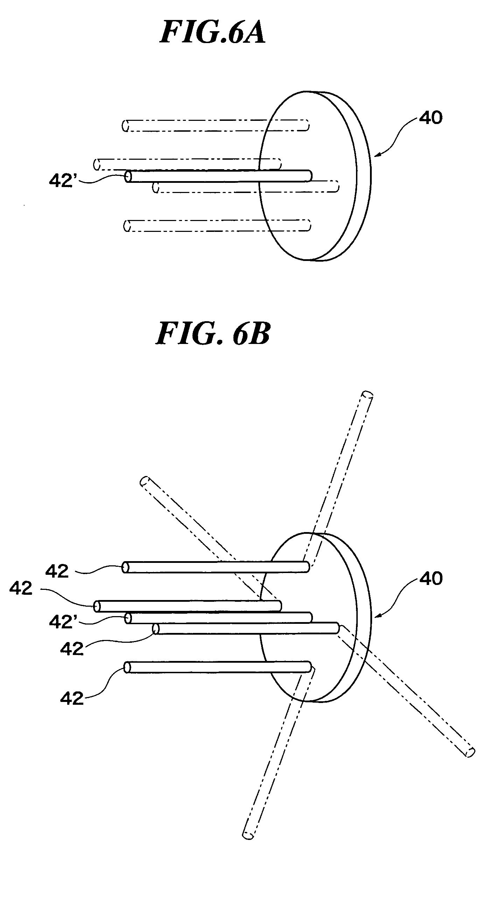

Now in reference to Figs. 6A and 6B, a bobbin 40, a jig for winding the screen-like object 20 of hollow fibers while positioning the members forming through hole 32 or the insert members 34, will be described. As shown in Fig. 6A, the bobbin 40 at first has one bobbin bar 42' in the center of a disk. The member forming through hole 32' (See Figs. 4A to 4C or 5A to 5C) or the insert member 34' (See Fig. 1) is fitted and mounted on the bobbin bar 42' . The screen-like object 20 of hollow fibers is wound around the member forming through hole 32' , or around the member forming through hole 32' and the insert member 34'. At this time, as no other bobbin bars are present, nothing stands in the way of winding. When winding is over in an appropriate number of layers, as shown in Fig. 6B, bobbin bars 42 are attached to the bobbin 40 in positions corresponding to the circumference of the wound-up screen-like object 20 of hollow fibers, and the member forming through hole 32 (See Figs. 4A to 4C or 5A to 5C) or the insert member 34 (See Figs. 4A to 4C) is attached to the bobbin bar 42. Incidentally, a constitution may be employed as shown with broken lines in Fig. 6B in which the bobbin bars 42 and the disk are interconnected flexibly so that the bobbin bars 42 are bent when winding with the bobbin bar 42' only so that the bars 42 does not stand in the way of winding, and erected at right angles to the disk when the member forming through hole 32 or the insert member 34 is attached, which is favorable as attachment and removal of the bobbin bar 42 is unnecessary.

Referring back to Figs. 4A to 4C, explanation of winding up the screen-like object 20 made of hollow fibers will be continued. When both the members forming through hole 32 and the insert members 34 are disposed as shown in Fig. 4C, the screen-like object 20 made of hollow fibers is further wound up together with those members. The screen-like object 20 made of hollow fibers is wound up until the winding up is over.

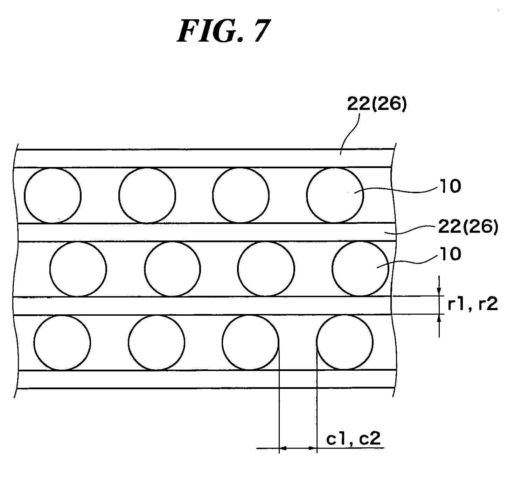

Fig. 7 is a partial view for explaining the disposition of the hollow fibers 10 on the closed side potting 60 (See Fig. 1 or 2) when the hollow fibers 10 are disposed parallel at approximately even intervals, and both ends of the hollow fibers are tied together using the tapes 22 and also the hollow fibers between the tapes are tied using the water-soluble tapes 26 and wound to make the screen-like object 20 of hollow fibers. The hollow fibers 10 are tied together using the tape 22 and the water-soluble tape 26 while leaving small intervals. The small intervals are maintained even after the winding up is over to leave the circumferential interval c1 or the peripheral interval c2. In other words, when the hollow fiber 10 is wound on the drum 24 (See Fig. 3A), a specified circumferential interval is left between turns. As the screen-like object 20 is wound up, with one turn overlapping on another, the intervals among the hollow fibers 10 in the overlap become the radial interval r1 or peripheral right angle interval r2. Because the interval of the hollow fibers 10 in the overlap is the thickness of the tape 22 and the water-soluble tape 26, the tape 22 and the water-soluble tape 26 of specified radial interval or peripheral right angle interval are used. In other words, while it is preferable that the tape 22 tying both ends of the hollow fibers 10 and the water-soluble tape 26 respectively are of the same in thickness, difference in thickness to some extent has little substantial influence on results.

As described above, the screen-like object 20 of hollow fibers in which hollow fibers are disposed parallel, at approximately even intervals, and both ends of the hollow fibers are tied together using the tapes and also using the water-soluble tapes 26 between the tapes is, manufactured by winding the hollow fiber 10 around the drum 24 with specified circumferential intervals between turns, tying together with two tapes 22 of a thickness of a specified radial interval, and further tying together with the water-soluble tapes 26 between the two tapes 22, and cutting the hollow fibers 10 between the two tapes 22. When the screen-like object 20 of hollow fibers is wound, the member forming through hole 32 or both the member forming through hole 32 and the insert member 34 are placed in positions, and further the screen-like object 20 are wound up so as to bundle the hollow fibers 10 as explained with Fig. 1 or 2, it is possible to easily dispose the hollow fibers 10 while maintaining specified circumferential intervals, radial intervals, peripheral intervals, and peripheral right angle interval.

As shown in Figs. 8A and 8B, pottings are formed on both ends of the wound-up screen-like object 20 of hollow fibers and respectively secured to be integral with them. Fig. 8A is a partial sectional view for explaining the open side potting 50; and Fig. 8B is for explaining the closed side potting 60. As for the open side potting 50, ends 11 on one side of the hollow fibers 10 are sealed (the hollow spaces are filled up) before forming the potting 50. The sealing is carried out before winding the screen-like object 20 by heat-sealing one side ends of the hollow fibers 10. Alternatively, the one side ends of the hollow fibers 10 may be sealed with a sealing agent, after winding up the screen-like object 20, by immersing the one side ends in a sealing agent, or by other method. After the sealing is over as described above, the one side ends are fixed with the potting material 52. As the one side ends 11 of the hollow fibers 10 are sealed, it does not occur that the potting material 52 finds its way into the hollow spaces of the hollow fibers 10. Here, the potting material 52 is cut along a plane at right angles to the hollow fibers 10 so as to cut off the seal of the hollow fibers 10, so that the hollow fibers 10 are open on the cut-off ends. In this way, the potting 50 is formed to secure the hollow fibers 10 each having an open end 12. Here, as for the expression 'the potting material 52 is cut along a plane at right angles to the hollow fibers 10, ' the cut need not necessarily be made along the plane at right angles to the hollow fibers 10 in a strict sense but may be made so that the seals 11 of all the hollow fibers 10 are left on one side of the cut and that all the hollow fibers 10 are secured with the potting material 52 on the other side of the cut. A protective layer 54 may be formed over the surface of the potting material 52 extending in the direction in which the hollow fibers 10 extend. When the hollow fibers 10 sway, large forces occur at their ends secured with the potting material 52, and moreover, as the ends are stiffened by the adhesion of the potting material 52, they are liable to break. Therefore, the protective layer 54 having softness is formed to protect the roots of the hollow fibers 10 and reduce forces exerted to the roots. As the protective layer 54, for example restricting solidification heat generation, silicone-based resin that takes a long solidification time is used. Incidentally, the insert members 34' and 34 (See Fig. 1) are embedded in the open side potting 50 and becomes part of the open side potting 50. When the protective layer 54 is formed, the water-soluble tapes 26 should be applied so that they are apart from the protective layer 54 as described before.

As shown in Fig. 8B, the closed side potting 60 is formed by embedding the closed ends 14 of the hollow fibers 10 in the potting material 62. In this way, by embedding the closed ends 14 in the potting material 62, the ends of the hollow fibers 10 are closed with the potting material 62, so that the closed ends 14 are formed without requiring a separate step of closing. Incidentally, it is also possible to close the closed ends 14 in advance by heat sealing or the like in the step of the screen-like object 20 of hollow fibers, followed by winding it up. Also the closed side potting 60 is preferably provided with a protective layer 64. By drawing off the members forming through hole 32' and 32 (See Figs. 4A to 4C and 5A to 5C) after solidification of the potting material 62 and the protective layer 64, the through holes 30' and 30 (See Figs. 1 and 2) are left behind. Incidentally, while the open side potting 50 and the closed side potting 60 are being formed as described above, the hollow fibers 10 are tied together with both the tapes 22 on both ends as well as the water-soluble tapes 26, so that mutual positions of the hollow fibers 10 are unlikely to be displaced.

When the open side potting 50 and the closed side potting 60 are formed, as the raw materials for the potting materials 52 and 62, or for the protective layers 54 and 64, liquid resins of low viscosity are often used so as to enter among the hollow fibers. Then, due to capillary phenomenon that can occur when the intervals among the hollow fibers 10 are small, the liquid resin sometimes infiltrates up the intervals among the hollow fibers 10. When the upward infiltration occurs in the potting materials 52 and 62, it detracts from the effect of the protective layers 54 and 64. If the upward infiltration occurs in the protective layers 54 and 64, it results in the decrease in the filtering area of the hollow fibers 10. When the specified intervals are maintained among the hollow fibers 10, it is possible to restrict the upward infiltration by this capillary phenomenon.

As shown in Fig. 9, it is also possible to wind up screen-like objects 20 of hollow fibers, to put them together into a single bundle, and to secure both ends of the hollow fibers 10 with the open side potting 50 and the closed side potting 60. In the wound-up screen-like object 20 made of hollow fibers, the intervals among the hollow fibers 10 do not change and are maintained at a specified value, because they are fixed with the tape 22 and the water-soluble tapes 26, and defined with the thicknesses of the tape 22 and the water-soluble tapes 26. In other words, it is possible to form the hollow fiber bundle 1 of increased number of hollow fibers 10 by putting together the wound-up screen-like objects 20 made of hollow fibers. As the large-sized hollow fiber bundle 1 is made by putting together the screen-like objects 20 of hollow fibers, the hollow fibers 10 are held at specified intervals. In this case, partition plates 56 and 66 may be interposed between the wound-up screen-like objects 20 made of hollow fibers, in parts secured with the pottings 50 and 60. The partition plates 56 and 66 secure the intervals among the wound-up screen-like objects 20 of hollow fibers, so that filtered liquid can flow easily to the wound-up screen-like objects 20 even if the number of hollow fibers 10 increases to make the hollow fiber bundle 1 large-sized. As the through holes 30' and 30 (See Figs. 1 and 2) are disposed in the wound-up screen-like object 20 and scrubbing air is appropriately supplied to the hollow fibers 10, the partition plates 56 and 66 may not be provided. Dropping the partition plates 56 and 66 facilitates manufacture.

Next, in reference to Fig. 10, a cylindrical module 100 of hollow fiber membrane including the hollow fiber bundle 1 described heretofore will be explained. Fig. 10 is a sectional view for explaining the constitution of the cylindrical module 100 of hollow fiber membrane. The cylindrical module 100 of hollow fiber membrane includes a cylindrical casing 70, a liquid supply nozzle 76 for introducing liquid to be filtered into the casing 70, and a filtered liquid nozzle 77 for drawing filtered liquid out of the casing. The cylindrical module 100 of hollow fiber membrane is installed, as shown in Fig. 10, with the liquid supply nozzle 76 vertically downward and with the filtered liquid nozzle 77 vertically upward. The casing 70 has a trunk plate 72 which corresponds to the side face of a cylinder, and two end plates 74 and 75 which correspond to the end faces of the cylinder. The hollow fiber bundle 1 or the hollow fiber bundle 2, with the closed side potting 60 on the lower end plate 74 side, is placed in the casing 70. The periphery of the closed side potting 60 and the open side potting 50 of the hollow fiber bundle 1 or the hollow fiber bundle 2 is in contact with the inside of the cylindrical casing 70 and fixed in a position in which the linearity or slack rate of the hollow fibers 10 is maintained. Axial liquid flow in the casing 70 is sealed with both the pottings 50 and 60. The inside of the casing 70 is divided into three portions with the potting 50 and 60. In other words, the three portions are: a middle portion 71a in which the hollow fibers 10 are arrayed between both the pottings 50 and 60, an entry portion 71b between the closed side potting 60 and the lower end plate 74, and a liquid collecting portion 71c between the open side potting 60 and the upper end plate 75. The liquid supply nozzle 76 is connected to the entry portion 71b, and the filtered liquid nozzle 77 is connected to the liquid collecting portion 71c. Typically as shown in Fig. 10, the liquid supply nozzle 76 is connected to the lower end plate 74; and the filtered liquid nozzle 77, to the upper end plate 75.

Two more nozzles are connected to the casing 70: a lower side nozzle 78 and an upper side nozzle 79 are connected to the trunk plate 72 of the middle portion 71a. The lower side nozzle 78 and the upper side nozzle 79 are preferably connected respectively to the vicinities of the closed side potting 60 and the open side potting 50.

With the cylindrical module 100 of hollow fiber membrane, liquid to be filtered is introduced through the liquid supply nozzle 76 into the casing 70. Here, the liquid to be filtered is, for example, water to be cleaned, typically with turbidity substances and bacteria floating. The liquid to be filtered is supplied through piping connected to the liquid supply nozzle 76. The liquid to be filtered is first introduced into the entry portion 71b. There, it passes through the through holes 30 and 30' to enter the middle portion 71a. At the time the manufacture is over, the hollow fibers 10 has the water-soluble tape 26 applied between the pottings 50 and 60. In other words, it is favorable that the parallel disposition of the hollow fibers 10 is unlikely to be disarrayed when the cylindrical module 100 of hollow fiber membrane is transported as well as when it is manufactured. However, as the liquid to be filtered enters the middle portion 71a, the water-soluble tape 26 is dissolved with the liquid to be filtered, disintegrated or dispersed, and removed from the hollow fibers 10. The water-soluble tape 26 that is dissolved, disintegrated or dispersed is discharged together with liquid as described later, having become high in concentration, out of the casing 70. In the case that a water pressure test is conducted after the manufacture of the cylindrical module 100 of hollow fiber membrane, the water-soluble tape 26 is dissolved, disintegrated or dispersed with the test water, and removed from the hollow fibers 10. In other words, with the cylindrical module 100 of hollow fiber membrane, there are casings in which the water-soluble tape 26 is already removed when the module is handed over to the user. As the water-soluble tape 26 is already removed at the time of use, it does not reduce the filtering area of the hollow fibers 10, does not hinder the flow of liquid to be filtered moving through the hollow fibers 10, or does not hinder the scrubbing air flow when the hollow fibers are cleaned.

Liquid to be filtered that has entered the middle portion 71a is filtered with the hollow fibers 10 disposed parallel, and enters the hollow spaces of the hollow fibers 10. Here, as the hollow fibers 10 are disposed while specified intervals are maintained, liquid to be filtered is easy to flow around the hollow fibers 10. Filtered liquid that has entered the hollow spaces of the hollow fibers 10 is introduced from the open end 12(See Fig. 1 or 2) of the hollow fibers 10 to the liquid collecting portion 71c. Filtered liquid from the hollow fibers 10 is collected to the liquid collecting portion 71c, drawn out of the filtered liquid nozzle 77, and supplied to the downstream side. Incidentally, to introduce the liquid to be filtered into the cylindrical module 100 of hollow fiber membrane and draw out the filtered liquid, either will do: to pressurize the liquid supplied from the liquid supply nozzle 76 or to suction the filtered liquid from the filtered liquid nozzle 77.

The liquid to be filtered, when part of it is filtered with the hollow fibers 10, increases in concentration. The liquid of increased concentration is discharged from the lower side nozzle 78 or upper side nozzle 79, and succeeding liquid to be filtered is introduced. Arranging the discharge out of the upper side nozzle 79 is particularly preferable, so that succeeding liquid to be filtered prevails in the middle portion 71a.

As the liquid to be filtered is filtered with the hollow fibers 10, solid matter accumulates on the outside surfaces of the hollow fibers 10. Therefore, scrubbing air is supplied through the liquid supply nozzle 76 to the entry portion 71b. To supply scrubbing air, either one of the followings is possible: to connect a scrubbing air transport pipe to a pipe connected to the liquid supply nozzle 76, to employ double piping in which a scrubbing air transport pipe is placed inside a pipe connected to the liquid supply nozzle 76, or to provide a scrubbing air supply nozzle separately from the liquid supply nozzle 76 to deliver scrubbing air. The scrubbing air introduced into the entry portion 71b is delivered through the through holes 30 and 30' to the middle portion 71a.

The scrubbing air delivered to the middle portion 71a rises through the liquid in the middle portion 71a. As described before, because the hollow fibers 10 are disposed at specified intervals around the through holes 30 and 30', scrubbing air appropriately flows to all over the hollow fibers 10. The solid matter that has accumulated on the outside surface of the hollow fibers 10 is peeled off by the scrubbing action accompanying the rise of the scrubbing air. Most of the solid matter that has peeled off falls toward the bottom of the middle portion 71a and discharged together with the liquid discharged from the lower side nozzle 78 out of the case 70.

The cylindrical module 100 of hollow fiber membrane may be alternatively constituted that liquid to be filtered is supplied through one of the lower side nozzle 78 and the upper side nozzle 79, and discharged through the other. In the cylindrical module 100 of hollow fiber membrane, the liquid supply nozzle 76 is exclusively used to supply scrubbing air to the entry portion 71b.

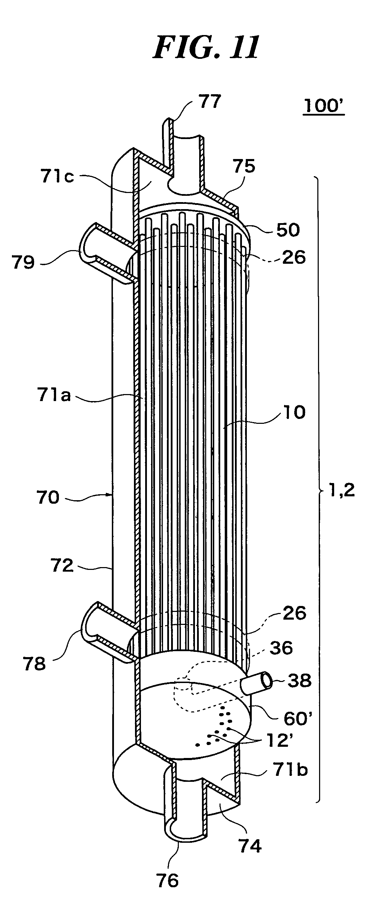

As shown in Fig. 11, a cylindrical module 100' of hollow fiber membrane may include a hollow fiber bundle of hollow fibers 10 with their both ends open. In this case, the potting 60' disposed in the vertically lower part is made thick and a scrubbing air supply pipe 38 is connected to the side face of the potting 60' . Then, a through hole 36, that is connected to the air supply pipe 38 and is open on the side on which the hollow fibers 10 are present (on the middle portion 71a side), is formed in the potting 60' . Incidentally, the through hole 36 may be of a slit shape. Or, in the case that the partition plate 66 (See Fig. 9) is disposed in the potting 60', a constitution may be employed in which a through hole, that is connected to the air supply pipe 38 and that is open on the middle portion 71a side, is formed in the partition plate 66 to supply scrubbing air through the air supply pipe 38. Or, a constitution may be employed in which no through hole 36 is formed in the potting 60', the air supply pipe 38 extends to right above the potting 60' on the middle portion 71a side, and a nozzle is provided there to discharge scrubbing air. When scrubbing air is supplied from the air supply pipe 38, scrubbing air is delivered from the potting 60' of the hollow fibers 10 to the middle portion 71a, and so the scrubbing air is appropriately sent into the hollow fibers 10. Liquid to be filtered is supplied from the lower side nozzle 78 and delivered out of the upper side nozzle 79. Or, it is supplied from the upper side nozzle 79 and delivered out of the lower side nozzle 78. As the liquid filtered with the hollow fibers 10 is collected from both ends of the hollow fibers 10, the collection may be made in large amount with small pressure loss.

Next, in reference to Fig. 12, an immersion type module 101 of hollow fiber membrane provided with the hollow fiber bundle 1 or hollow fiber bundle 2 will be described. Fig. 12 is a view for explaining the constitution of an immersion type module 101 of hollow fiber membrane. The immersion type module 101 of hollow fiber membrane includes: the hollow fiber bundle 1 or the hollow fiber bundle 2, an air header 80 connected to the closed side potting 60 of the hollow fiber bundle 1 or the hollow fiber bundle 2, and a filtered liquid header 90 connected to the open side potting 50. The air header 80 is a cylindrical or hemispherical container capped with the closed side potting 60 to constitute a space in communication with all the through holes 30 and 30' bored in the closed side potting 60. The filtered liquid header 90 is a cylindrical or hemispherical container capped with the open side potting 50 to constitute a space in communication with all the open ends 12 of the hollow fibers 10 that are open to the open side potting 50. The hollow fiber bundle 1 or the hollow fiber bundle 2 is installed as shown in Fig. 12 with the closed side potting 60 or the air header 80 vertically downward and with the open side potting 50 or the filtered liquid header 90 vertically upward.

The immersion type module 101 of hollow fiber membrane further includes: a connecting pipe 84 connected to the air header 80, an air supply pipe 86 connected to the connecting pipe 84, a connecting pipe 94 connected to the filtered liquid header 90, and a filtered liquid pipe 96 connected to the connecting pipe 94. The air header 80 is securely supported with both the air supply pipe 86 and the connecting pipe 84; the filtered liquid header 90 is securely supported with both the filtered liquid pipe 96 and the connecting pipe 94. As the air header 80 and the filtered liquid header 90 are securely supported, the hollow fiber bundle 1 or the hollow fiber bundle 2 is maintained in the state in which the hollow fibers 10 maintain linearity or the rate of slackness. With the hollow fiber bundle 1 or the hollow fiber bundle 2, and the air header 80 and the filtered liquid header 90 supported as described above, the module is immersed in the liquid to be filtered. While the immersion type module 101 of hollow fiber membrane is immersed in water to be cleaned held typically in a water tank (not shown), it may be immersed directly in a river if the water to be cleaned is for example river water. At the time the manufacture is over, the hollow fibers 10 have the water-soluble tape 26 applied between both the potting 50 and 60. In other words, it is favorable that the parallel disposition of the hollow fibers 10 is unlikely to be disarrayed when the cylindrical module 101 of hollow fiber membrane is transported as well as when it is manufactured. However, when the immersion type module 101 of hollow fiber membrane is immersed in the liquid to be filtered, the water-soluble tape 26 is dissolved with the liquid to be filtered, disintegrated or dispersed, and removed from the hollow fibers 10. The water-soluble tape 26 that is dissolved, disintegrated or dispersed settles down on the bottom of the water tank or is washed away with river water. Incidentally, in the case that the immersion type module 101 of hollow fiber membrane takes an immersion test after the manufacture, the water-soluble tape 26 is dissolved with the liquid to be filtered, disintegrated or dispersed, and removed from the hollow fibers 10. In other words, there may be cases in which the water-soluble tape 26 is already removed at the time the immersion type module 101 of hollow fiber membrane is handed over to the user. As the water-soluble tape 26 is already removed at the time of use, it does not reduce the filtering area of the hollow fibers 10, does not hinder the flow of liquid to be filtered moving through the hollow fibers 10, or does not hinder the scrubbing air flow when the hollow fibers are cleaned.

The filtered liquid pipe 96 is connected to the upstream side of a pump (not shown) and the filtered liquid is suctioned with the pump. As the filtered liquid is suctioned, liquid to be filtered is filtered with the hollow fibers 10 and flows from the hollow spaces of the hollow fibers 10, through the open end 12 (See Fig. 1 or Fig. 2) and the filtered liquid header 90, to the connecting pipe 94 and the filtered liquid pipe 96. Here, as the hollow fibers 10 are disposed with specified intervals maintained, liquid to be filtered prevails easily over the hollow fibers 10. As the liquid to be filtered is filtered with the hollow fibers 10, solid matter accumulates on the outside surface of the hollow fibers 10. Therefore, scrubbing air is supplied from the air supply pipe 86 through the connecting pipe 84 to the air header 80. The air sent to the air header 80 is delivered via the through holes 30 and 30' to the liquid to be filtered.

The scrubbing air delivered into the liquid to be filtered rises through the liquid to be filtered. As described before, because the hollow fibers 10 are disposed while specified intervals are maintained around the through holes 30 and 30', scrubbing air reaches appropriately to all the hollow fibers 10. The solid matter that has accumulated on the outside surface of the hollow fibers 10 is peeled off by the scrubbing action accompanying the rise of the scrubbing air. The peeled solid matter is removed from the liquid to be filtered as it settles down on the bottom of the water tank, or as it is washed away in the river.

While Fig. 12 shows that only one set of the hollow fiber bundle 1 or the hollow fiber bundle 2, the air header 80, and the filtered liquid header 90 is connected to the air supply pipe 86 and the filtered liquid pipe 96, two or more sets of the hollow fiber bundle 1 or the hollow fiber bundle 2, the air header 80, and the filtered liquid header 90 may be connected, to constitute the immersion type module 101 of hollow fiber membrane. While Fig. 12 also shows that the air header 80 and the filtered liquid header 90 are secured and supported respectively through the connecting pipes 84 and 94 with the air supply pipe 86 and the filtered liquid pipe 96, a constitution may also be employed in which the supply of scrubbing air and the suction of filtered liquid are carried out using flow passages having no rigidity such as hoses, and the air header 80 and the filtered liquid header 90 are secured and supported with a supporting structure.

It is also possible to employ a constitution in which both ends of the hollow fibers 10 of the hollow fiber bundle 1 or the hollow fiber bundle 2 are made open, namely both ends of the hollow fibers 10 are secured with the open end potting 50, and both ends are connected to the filtered liquid header 90. Suctioning filtered liquid from both ends of the hollow fibers 10 makes it possible to increase the amount of liquid to be suctioned. When the hollow fiber bundle 1 or the hollow fiber bundle 2 is constituted as described above, the piping for delivering scrubbing air is disposed right above the open end potting 50 located on the vertically down side to supply scrubbing air for cleaning the hollow fibers 10. Or, when the immersion type module 101 of hollow fiber membrane is installed so that the hollow fibers 10 are horizontal, the piping for delivering scrubbing air is laid under the hollow fibers 10.

While the figures heretofore show that four through holes 30 are formed and the hollow fibers 10 are bundled concentrically, the number of through holes 30 may be changed as shown in Figs. 13A to 13E depending on the diameter of the hollow fiber bundle 1 or the hollow fiber bundle 2; and the diameter, the number, the material, etc. of the hollow fiber 10. Accordingly, the shape surrounding the through holes 30 also changes. Incidentally in Figs. 13A to 13E, the dash-and-dotted lines schematically indicate the shape in which the hollow fibers 10 are disposed. Fig. 13A shows an example with three through holes 30, with the hollow fibers 10 bundled in a cylindrical shape inside the through holes 30, and with the hollow fibers 10 bundled in a round-vertex triangular shape outside the through holes 30. In other words, the shape surrounding the through holes 30 is a round-vertex triangular shape. Incidentally, when polygons such as triangle, square, etc. are referred to, like the triangle with round vertices in close observation, they include shapes with round corners. So the term square means not only the one in a strict sense but also ones with round corners. In Fig. 13B, there are six through holes 30. There, the hollow fibers 10 are bundled in a cylindrical shape inside the through holes 30 while they are bundled in a hexagonal shape outside the through holes 30. In other words, the shape surrounding the through holes 30 is a hexagon. In Fig. 13C, there are eight through holes 30, with the hollow fibers 10 bundled in a cylindrical shape inside the through holes 30, and with the hollow fibers 10 bundled in an octagonal shape in a strict sense but almost in a circular shape outside the through holes 30. For polygons with more than eight angles, although the hollow fibers 10 are bundled in polygonal shape, there is no substantial difference from a circular bundle. In other words, the shape surrounding the through holes 30 is a circle.

As shown in Fig. 13D, additional through holes 30a may also be formed outside the through holes 30. Forming the through holes 30a in this way makes it possible to supply scrubbing air appropriately to the hollow fibers 10 even if the hollow fiber bundle is made in a large diameter. Further as shown in Fig. 13E, the through holes 30a may be formed around the periphery of the wound-up hollow fibers 10. When the through holes 30a are formed around the periphery of the hollow fibers 10, scrubbing air may be supplied also from outside the hollow fibers 10, so that scrubbing air reaches more easily to all the hollow fibers 10. Or, when the hollow fiber bundle is made large in diameter, the hollow fiber bundles 1 explained heretofore may be bundled into a single, large bundle of hollow fibers.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A screen-like object made of hollow fibers, comprising:
porous hollow fibers disposed parallel at approximately even intervals;
tapes for tying together the hollow fibers at both ends, respectively, of the hollow fibers; and
a water-soluble tape for tying together the hollow fibers at a position apart from both ends of the hollow fibers across the hollow fibers.

2. A method of manufacturing a hollow fiber bundle, comprising the steps of:
forming a screen-like object made of hollow fibers, with porous hollow fibers disposed parallel at approximately even intervals, with both ends of the hollow fibers tied together respectively with tapes, and tied together at a position apart from both ends with a water-soluble tape;
sealing one end or both ends of the hollow fibers;
winding up the screen-like object made of hollow fibers so as to bundle the hollow fibers;
forming pottings for integrally securing both ends, respectively, of the screen-like object made of hollow fibers wound up in the step of winding up ; and
cutting the potting together with the hollow fibers along a plane at right angles to the hollow fibers to cut off a sealed end and to open the hollow fibers.

3. The method of manufacturing the hollow fiber bundle as recited in Claim 2,
wherein the step of sealing has the step of sealing only one end of the hollow fibers,
the step of winding up has the steps of:
winding the screen-like object in a cylindrical shape,
disposing a member forming through hole shorter than the hollow fibers along a periphery on one end, of the screen-like object wound in the cylindrical shape in the step of winding in the cylindrical shape, opposite the end on which the screen-like object is sealed, and
further winding the screen-like object with the member forming through hole contained therein.

4. The method of manufacturing the hollow fiber bundle as recited in Claim 3, comprising the steps of;
disposing an insert member shorter than the hollow fibers on a periphery of the end, of the screen-like object for disposing the member forming through hole, on which the screen-like object is sealed.

5. The method of manufacturing the hollow fiber bundle as recited in any one of Claims 2 to 4, comprising the steps of;
collecting the screen-like objects wound up in the step of winding up, wherein the step of forming the pottings integrally secures the both ends respectively of the screen-like objects collected in the collecting step.

6. A cylindrical module of hollow fiber membrane, comprising:
the hollow fiber bundle manufactured by the method of manufacturing the hollow fiber bundle as recited in any one of Claims 2 to 5;
an oblong casing containing the hollow fiber bundle;
nozzles respectively connected to both ends of the casing; and
a nozzle connected to the casing at a location between the pottings.

7. An immersion type module of hollow fiber membrane constituted to be immersible in liquid to be filtered comprising:
a hollow fiber bundle manufactured by the method of manufacturing a hollow fiber bundle as recited in any one of Claims 2 to 5; and
a filtered liquid header in communication with an open end of the hollow fiber bundle opened in the step of cutting.
